# EUROPÄISCHE PATENTSCHRIFT

(11) **EP 2 840 290 B1**
(45) Veröffentlichungstag und Bekanntmachung des Hinweises auf die Patenterteilung: **07.11.2018**
(21) Anmeldenummer: 14401086.5
(22) Anmeldetag: 06.08.2014
(51) Int. Cl.: F16L 5/02, A62C 2/06, F16L 5/04, H02G 3/04, H02G 3/22

(54) **Anordnung in Form einer branddichten und/oder rauchgasdichten Durchführung von Rohren**
Assembly in the form of a fire-proof and/or gas-proof conduit lead-through
Système sous la forme d'une traversée de tubes étanche aux gaz et/ou ignifuge

(30) Priorität: 20.08.2013 DE 102013108957; 07.11.2013 DE 102013112252
(43) Veröffentlichungstag der Anmeldung: 25.02.2015
(73) Patentinhaber: Kaiser GmbH & Co. KG, 58579 Schalksmühle (DE)
(72) Erfinder: Langenohl, Benedikt, 58579 Schalksmühle (DE); Boecker, Jörg, 58769 Nachrodt-Wiblingwerde (DE); Born, Stefan, 58640 Iserlohn (DE)
(74) Vertreter: Köchling, Conrad-Joachim

(56) Entgegenhaltungen:
- EP-A1- 1 962 398
- WO-A1-01/09538
- DE-U1-202010 015 515
- GB-A- 2 444 400
- KR-A- 20110 124 017

## Beschreibung

Die Erfindung betrifft eine Anordnung in Form einer branddichten und/oder rauchgasdichten Durchführung von Rohren und/oder Kabeln durch eine Gebäudewand oder -decke, wobei die Gebäudewand oder -decke eine Durchgangslochung aufweist.

Im Stand der Technik ist es bekannt, durch Gebäudedecken eine branddichte und/oder rauchgasdichte Durchführung von Kabeln vorzusehen. Hierzu wird in der Decke ein entsprechendes Durchgangsloch geschaffen, durch welches dann die Kabel verlegt werden können. Anschließend werden die durchgeführten Elemente eingegipst oder die Durchgangslochung wird in anderer Weise manuell verfüllt.

Eine derartige Ausgestaltung ist vom Arbeitsaufwand her unbefriedigend und auch vom Arbeitsergebnis her nicht befriedigend, weil es auf die Handwerkskunst des Einbauenden ankommt, ob die Anordnung zweckbestimmend ausgeführt wird oder nicht.

Aus der WO-A-01/09538 ist eine Anordnung eingangs bezeichneter Art bekannt. Hierbei ist ein rohrförmiges Gehäuse mit einem umlaufenden Flansch vorgesehen, in welchem ein Rohr koaxial angeordnet ist. Zwischen dem Mantel des Gehäuses und dem Rohr sind an den Enden des Rohres Dichtungen angeordnet, die sich unter Temperatureinwirkung ausdehnen und das Rohr zusammendrücken. Damit wird eine Abschottung des Durchgangs durch das Gehäuse und das Rohr erreicht. Aus der EP-A-1 962 398 ist eine Kabelverschraubung bekannt, deren Dichteinsatz aus intumeszierendem Material besteht.

Ausgehend von diesem Stand der Technik liegt der Erfindung die Aufgabe zugrunde, eine Anordnung gattungsgemäßer Art zu schaffen, die einfach und mit hoher Präzision ausgeführt werden kann, wobei nur wenige Einzelteile erforderlich sind.

Um die Aufgabe zu lösen und eine hohe Montagesicherheit zu erreichen, schlägt die Erfindung vor, dass in die Durchgangslochung mit Bewegungsspiel zur Lochlaibung ein Rohrstück aus feuerbeständigem Material eingesetzt ist, das an einem ersten Endbereich einen über das Rohrstück seitlich vorragenden Flansch aufweist, der in Montagesolllage an der Deckenfläche anliegt, in die flanschseitige Mündung des Rohrstücks eine Hülse eingesetzt ist, die über die Mündung vorragt, die aus intumeszierendem Material besteht oder innenseitig und/oder außenseitig von solchem Material überdeckt ist und die Mittel aufweist, mittels derer durch die Hülse geführte Kabel oder Rohre rauchdicht umfasst sind, das Rohrstück an einem zweiten Endbereich außenliegend umlaufend als Dichtmittel einen Materialstreifen aus intumeszierendem Material aufweist, das Rohrstück innenliegend umlaufend als Dichtmittel einen Materialstreifen aus intumeszierendem Material aufweist, und/oder das Rohrstück an seinem zweiten Ende ein Kantenschutzprofil aus intumeszierendem Material aufweist, und das zweite Ende des Rohrstücks Haltemittel aufweist, die das außenliegende Dichtmittel, das innenliegende Dichtmittel oder den innenliegenden Bereich des aufgesteckten Kantenschutzprofils und den außenliegenden Bereich des Kantenschutzprofils lagesicher am Rohrstück fixieren.

Bei einer solchen Ausgestaltung wird beispielsweise eine Durchgangslochung von ausreichendem Durchmesser mittels eines geeigneten Werkzeuges erzeugt. In diese wird das Rohrstück aus feuerbeständigem Material so eingesetzt, dass der Flansch in der Montagesolllage an der entsprechenden Wandfläche anliegt. Das Rohrstück durchgreift die Durchgangslochung mit Bewegungsspiel, wodurch die Montage erleichtert ist. In die flanschseitige Mündung des Rohrstücks ist eine Hülse aus intumeszierendem Material eingesetzt. Alternativ kann die Hülse auch beispielsweise aus Kunststoff bestehen und innenseitig und/oder außenseitig mit intumeszierendem Material überdeckt sein. Ferner ist in der Hülse eine Anordnung von Mitteln vorgesehen, die dafür sorgen, dass die durch die Hülse geführten Kabel oder Rohre rauchgasdicht umfasst sind. Solche Mittel sind an sich im Stand der Technik bekannt.

Zusätzlich weist das Rohrstück außenliegend oder innenliegend Dichtmittel aus intumeszierendem Material auf. Zur Befestigung der Einheit an der entsprechenden Decke oder Wandung kann der Flansch mit geeigneten Mitteln an dem Material an der Wand oder der Decke fixiert werden. Die Kabel oder Rohre, die durch diese Anordnung verlegt sind, sind rauchgasdicht umfasst, weil das in der Hülse befindliche Material eine Rauchgasdichtigkeit gewährleistet. Auch bei Auftreten von Feuer wird eine Abschottung bzw. Brandschutzfunktion sichergestellt, die über einen ausreichenden Zeitraum Branddichtigkeit gewährleistet, weil im Brandfalle einerseits das intumeszierende Material der Hülse aufquillt und den Querschnitt abschottet, andererseits quillt auch das intumeszierende Dichtmittel entsprechend auf, welches das Rohrstück außenliegend umgibt, so dass eine Abdichtung zwischen Rohrstück und Lochlaibung erreicht ist. Zum Inneren hin quillt das innenliegende Dichtmittel aus intumeszierendem Material ebenfalls auf und bildet eine zusätzliche Sperre, die über einen ausreichenden Zeitraum eine Abschottung gewährleistet.

Als Dichtmittel können außenliegend umlaufend oder innenliegend umlaufend Materialstreifen aus intumeszierendem Material vorgesehen sein. Auch kann auf das zweite Ende des Rohrstücks ein Kantenschutzprofil aus intumeszierendem Material aufgebracht sein.

Hierdurch ist es in einfache Weise möglich, die scharfe Kante des Rohrstücks schützend zu umhüllen, sodass diese keine Schäden am Installationsmaterial verursachen kann.

Durch die am zweiten Ende des Rohrstückes vorgesehenen Haltemittel, kann das außenliegende Dichtmittel und/oder auch das innenliegende Dichtmittel und/oder der innenliegende und der außenliegende Bereich des Kantenschutzprofils lagerichtig positioniert werden und lagesicher am Rohrstück fixiert werden.

Eine bevorzugte Ausbildung hierzu wird darin gesehen, dass die Haltemittel durch am zweiten Ende des Rohrstücks ausgebildete Laschen gebildet sind, die wechselnd nach innen oder außen umgebogen sind und die Dichtmittel oder die innenliegenden und außenliegenden Bereiche des Kantenschutzprofils zwischen sich und dem Mantel des Rohrstücks halten.

Durch diese Laschen ist eine Montagehilfe gebildet, die zunächst die Montage der Elemente in der richtigen Anordnung und Ausrichtung ermöglicht und erleichtert und die auch zur Lagesicherung der montierten Elemente führt, indem die Laschen entsprechend umgebogen werden und die Dichtmittel an dem Rohrstück halten.

Vorzugsweise ist dabei vorgesehen, dass die Laschen umlaufend mit Abstand voneinander am Rand des zweiten Endes des Rohrstücks angeformt sind.

Insbesondere ist dabei vorgesehen, dass die Laschen aus biegbarem Material bestehen.

Auch kann vorgesehen sein, dass die Haltemittel durch Schlitze in einer Stirnkante des Kantenschutzprofils gesteckt und wechselweise nach innen und außen umgebogen sind.

Hierdurch wird noch eine bessere Lagepositionierung und Ausrichtung der Teile zueinander bei der Montage erreicht, die durch das wechselweise Umbiegen der Haltemittel dauerhaft gesichert wird.

Auch kann vorgesehen sein, dass die Laschen in passende Aussparungen am Kantenschutz bündig eingreifen.

Zudem ist bevorzugt vorgesehen, dass der innenliegende Materialstreifen aus intumeszierendem Material oder der entsprechende innenliegende Bereich des Kantenschutzprofils dicker und/oder länger ist als der außenliegende Bereich des Kantenschutzprofils, vorzugsweise mindestens doppelt so dick und/oder doppelt bis vierfach so lang ist.

Auch kann bevorzugt vorgesehen sein, dass der innenliegende Materialstreifen oder der innenliegende Schenkel des im Querschnitt U-förmigen Kantenschutzprofils länger als der außenliegende ist, vorzugsweise doppelt bis vierfach so lang.

Zudem ist bevorzugt vorgesehen, dass die Haltemittel in entsprechender Aussparung bzw. Rücksprünge der innenliegenden Bereiche des Kantenschutzprofils eingreifen.

Ausführungsbeispiele der Erfindung sind in der Zeichnung dargestellt und im Folgenden näher beschrieben. Erfindungsgemäße Merkmale der Erfindung sind in den Figuren 20 bis 25 der Zeichnung dargestellt.

Es zeigt:

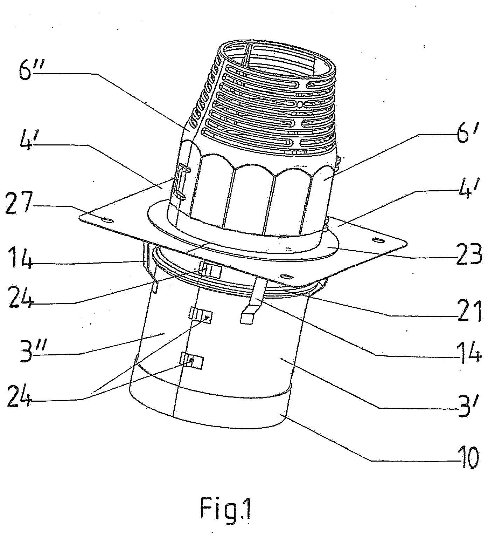

- Figur 1: einen Zusammenbau von erfindungswesentlichen Teilen in isometrischer Ansicht;

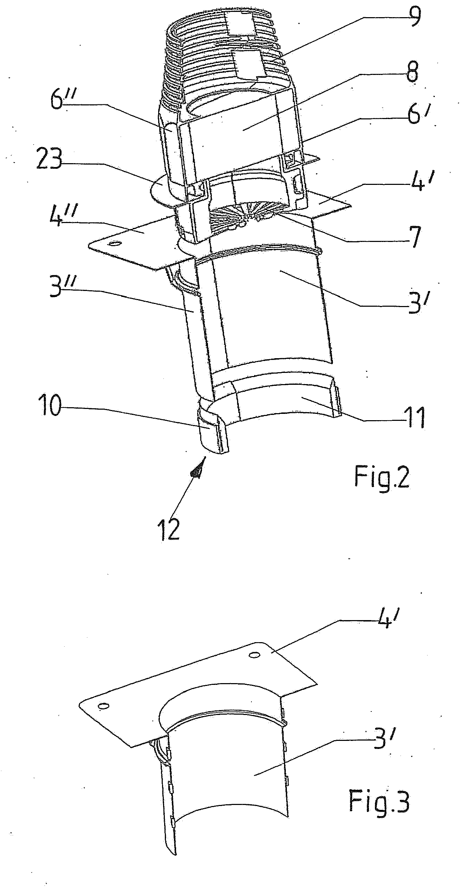

- Figur 2: eine aus Halbschalenteilen zusammengesetzte, bzw. zusammensetzbare Anordnung in Ansicht;
- Figur 3: eine Einzelheit in Ansicht;
- Figur 4: eine weitere Einzelheit in Ansicht;
- Figur 5 + 6: Details dieser Ausführungsform in Ansicht in einer Vormontagesituation und in einer Montagesituation;
- Figur 7: eine Anordnung im Montagesollzustand im Mittellängsschnitt gesehen;
- Figur 8: eine Einzelheit in einer Vormontagesituation;
- Figur 9: die gleiche Einzelheit in einer Sollmontagelage gesehen;
- Figur 10: eine Variante in einer Ansicht analog Figur 1 gesehen;
- Figur 11: eine Einzelheit dieser Variante in Ansicht;
- Figur 12: eine weitere Variante in Explosionsdarstellung;
- Figur 13: eine Variante im Zusammenbau gezeigt;
- Figur 14: eine weitere Variante eines Teiles der Anordnung in Ansicht gesehen;
- Figur 15: die Variante vor der Zusammenführung der Einzelteile;
- Figur 16: ein Einzelteil der Variante in Ansicht;
- Figur 17: einen Zusammenbau einer Anordnung in isometrischer Ansicht;
- Figur 18: eine aus Halbschalenteilen zusammengesetzte bzw. zusammensetzbare Anordnung in Ansicht;
- Figur 19: eine Einzelheit in Ansicht;
- Figur 20 und 21: die Einzelheit der Figur 19 in einer erfindungsgemäßen Ausgestaltung;
- Figur 22 und 23: die Einzelheit mit aufgebrachtem Kantenschutzprofil ebenfalls in Ansicht;
- Figur 24 und 25: eine Ausschnittsvergrößerung eines Details der Figur 22 bzw. 23 in Ansicht.

In den Zeichnungen ist eine Anordnung in Form einer branddichten oder rauchgasdichten Durchführung von Rohren und/oder Kabeln durch eine Gebäudewand oder Decke 1 gezeigt, wobei die Gebäudewand eine Durchgangslochung 2 aufweist.

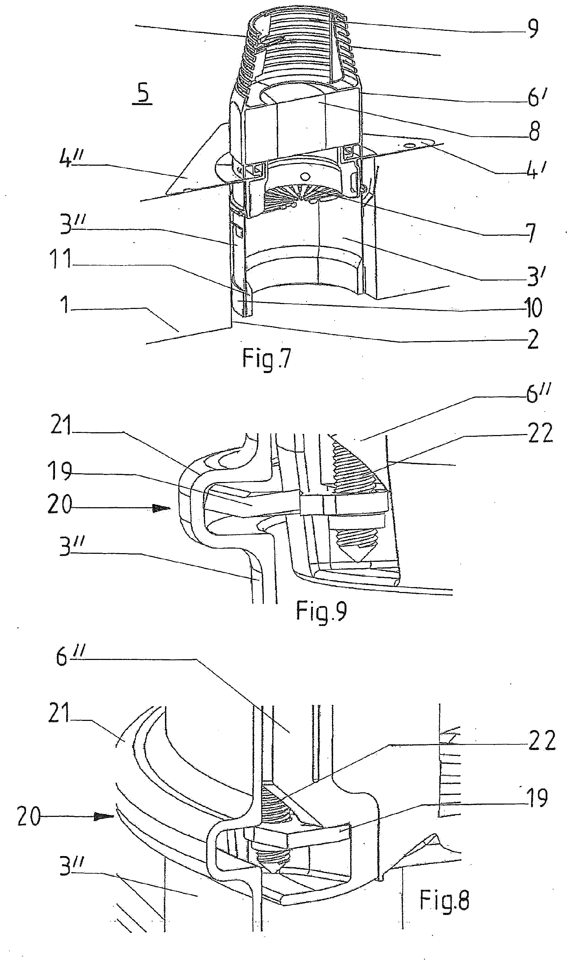

Erfindungsgemäß ist in diese Durchgangslochung 2 mit radialem Bewegungsspiel zur Lochlaibung ein Rohrstück 3',3" aus feuerbeständigem Material eingesetzt. Das Rohrstück weist an mindestens einem Endbereich einen über den Mantel des Rohrstückes 3',3'' seitlich vorragenden Flansch 4',4" auf, der in Montagesolllage, die beispielsweise in Figur 7 gezeigt ist, an der Decken- oder Wandfläche 5 anliegt. In die flanschseitige Mündung des Rohrstückes 3',3'' ist eine Hülse 6',6" eingesetzt, die über die Mündung nach außen vorragt, wie insbesondere in Figur 7 veranschaulicht ist. Diese Hülse 6',6" besteht vorzugsweise aus intumeszierendem Material. Des Weiteren sind im von der Hülse 6',6" umschlossenen Innenraum Mittel 7,8,9 unverlierbar angeordnet, mittels derer durch die Hülse 6',6" geführte Kabel oder Rohre zumindest rauchgasdicht umfasst sind. Das Rohrstück 3',3'' weist außenliegend und innenliegend Dichtmittel 10,11 aus intumeszierendem Material auf. Vorzugsweise besteht das Rohrstück 3',3'' samt Flansch 4',4" aus Metall, insbesondere Stahl. Die Hülse 6',6" besteht aus Kunststoff, insbesondere aus intumeszierendem Kunststoff.

Bei den Ausführungsbeispielen weist das Rohrstück 3',3'' außenliegend umlaufend als Dichtmittel 10 einen Materialstreifen aus intumeszierendem Material auf und ebenso innenliegend umlaufend als Dichtmittel 11 einen Materialstreifen aus intumeszierendem Material. Insbesondere bei Ausführungsformen, bei denen das Rohrstück 3',3" nur an einem Ende einen Flansch 4',4" aufweist, ist auf das andere Ende ein Kantenschutzprofil 12 aufgesteckt, welches die beiden Dichtmittel 10,11 aus intumeszierendem Material als integrale Bestandteile umfasst. Vorzugsweise ist der innenliegende Materialstreifen 11 erheblich dicker und/oder breiter als der außenliegende Materialstreifen 10.

Wie beispielsweise in Figur 7 gezeigt, hat das Rohrstück 3', 3" eine Länge, die der minimalen Länge der Durchgangslochung 2 der Wand oder Decke 1 gleicht.

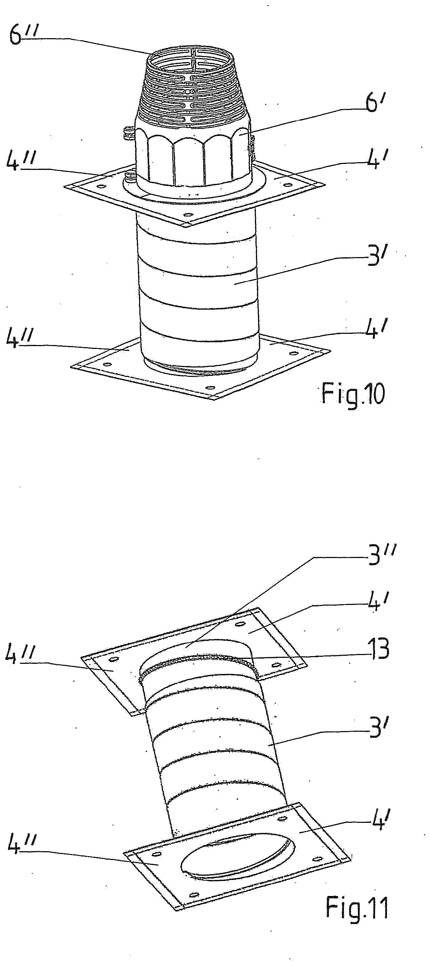

Beispielsweise bei der Ausführungsform nach Figur 10 und 11 weist das Rohrstück 3',3" an beiden Enden einen Flansch 4',4" auf, der in Montagesolllage an jeweils einer Außenfläche der Wand oder Decke anliegt. Hierbei kann entweder nur in ein Ende des Rohrstückes eine Hülse 6',6" eingesetzt sein oder auch in beide Enden des Rohrstückes.

Bei der Ausführungsform nach Figur 10 und 11 besteht das Rohrstück aus zwei ineinander gesetzten Teilrohrstücken, die gegeneinander in Längsrichtung verstellbar sind und so an unterschiedlich dicke Wände oder Decken anpassbar sind. Hierzu weist bei dieser Ausführungsform das relativ innenliegende Rohr eine nach Art eines Gewindes umlaufende Rippe 13 auf, während das außenliegende Rohr am Innenmantel eine entsprechende Konturierung aufweist, sodass die Gesamtlänge des aus den beiden Rohren gebildeten Rohrstücks gegeneinander durch Drehung der Rohre zueinander verkürzt oder verlängert werden kann.

Eine besondere Ausgestaltung besteht darin, dass das Rohrstück 3',3" am Außenmantel federnde Haltefinger 14 aufweist, die sich in der Einbaulage, wie beispielsweise in Figur 7 gezeigt ist, an der Laibung der Durchgangslochung 2 abstützen.

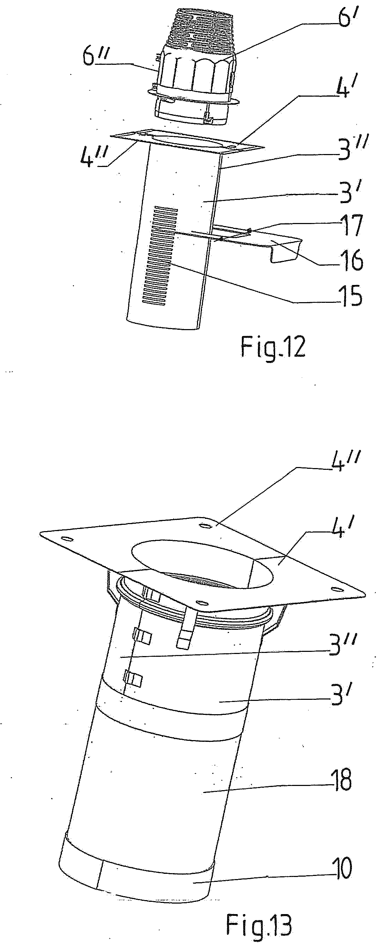

Bei einer Ausführungsform, die in Figur 12 gezeigt ist, weist das Rohrstück 3',3" nur an einem Ende einen Flansch 4',4" auf. Das andere Ende des Rohrstückes 3',3" ragt in der Montagesolllage aus der Durchgangslochung vor. Im vorragenden Bereich ist eine Anzahl von vorzugsweise quer zur Einsteckrichtung gerichteten Verriegelungskonturen 15, einander gegenüberliegend vorgesehen. Ferner ist ein Verschlussschieber 16 vorgesehen, der quer auf das Rohrstück 3',3" im über die Durchgangslochung vorragenden Bereich aufgesteckt ist und mit den Verriegelungskonturen 15 zusammenwirkende Riegelkanten 17 aufweist. In der Montagesolllage liegt der Verschlussschieber 16 an der dem Flansch 4',4" abgewandten Seite der Wand oder Decke an.

Bei der Ausführungsform nach Figur 13 ist zusätzlich zu dem Rohrstück 3',3" ein zweites Rohrstück 18 vorgesehen, welches auf das Ende des ersten Rohrstückes aufgesteckt oder in dieses eingesteckt ist. Es wird so eine Verlängerung des Gesamtrohrstückes 3',3",18 gebildet, um größere Decken- oder Wandstärken auszugleichen.

Eine weitere Besonderheit ist in den Figuren 8 und 9 gezeigt und nachstehend näher erläutert.

Die in das Rohrstück 3',3" einsetzbare Hülse 6',6" weist an einem Teilbereich, der in das Rohrstück 3',3" eingreift, ausschwenkbare Laschen 19 auf, die in einer Vormontagelage, die in Figur 8 gezeigt ist, eingeschwenkt sind und nicht über den Mantel der Hülse 6',6" vorragen, aber in der Montagesolllage, die in Figur 9 gezeigt ist, über den Mantel der Hülse 6',6" nach radial außen vorragen. Diese vorragenden Teile der Laschen 19 greifen in Montagesolllage in Haltekonturen 20 des Rohrstückes 3',3" ein.

Im Ausführungsbeispiel sind diese Haltekonturen 20 durch eine umlaufende Sicke 21 des Rohrstückes 3',3" gebildet. Hierdurch wird erreicht, dass die Hülse 6',6" in jeder Einstecklage mit der Lasche 19 eine entsprechende Haltekontur 20 trifft.

Die Laschen 19 sind in an sich bekannter Weise mittels an der Hülse 6',6" achsparallel zu dieser angeordneter Stellschrauben 22 betätigbar. Insbesondere bei dieser Ausführungsform besteht die Hülse 6',6" aus zwei koaxial zueinander angeordneten, aneinander lösbar befestigten Hülsenteilen, deren eines in das Rohrstück 3',3" eingreift, sich mit einem umlaufenden Flanschrand 23 in Montagesolllage am Flansch 4',4" oberseitig abstützt und an seiner Stirnfläche Zugriffsöffnungen für die in dem Hülsenteil gehaltenen Stellschrauben 22 aufweist. Deren zweites Teil ist auf das erste Hülsenteil aufgesetzt und an diesem lösbar befestigt, wobei das zweite Hülsenteil in der Montagesolllage die Zugriffsöffnungen zu den Stellschrauben 22 überdeckt.

Um die nachträgliche Montage dieser Anordnung auf schon durch Wandöffnungen verlegten Kabeln oder Rohren zu ermöglichen, ist das Rohrstück 3',3" aus zwei Halbschalen bildenden Teilstücken zusammengesetzt, die lösbar aneinander befestigt sind. Dies betrifft alle Ausführungsformen mit Ausnahme der Ausführungsformen nach Figur 10 und 11 bzw. nach Figur 12.

Die beiden Halbschalen, die das Rohrstück 3',3" bilden, weisen an ihrer Trennkante Verriegelungskonturen 24 auf.

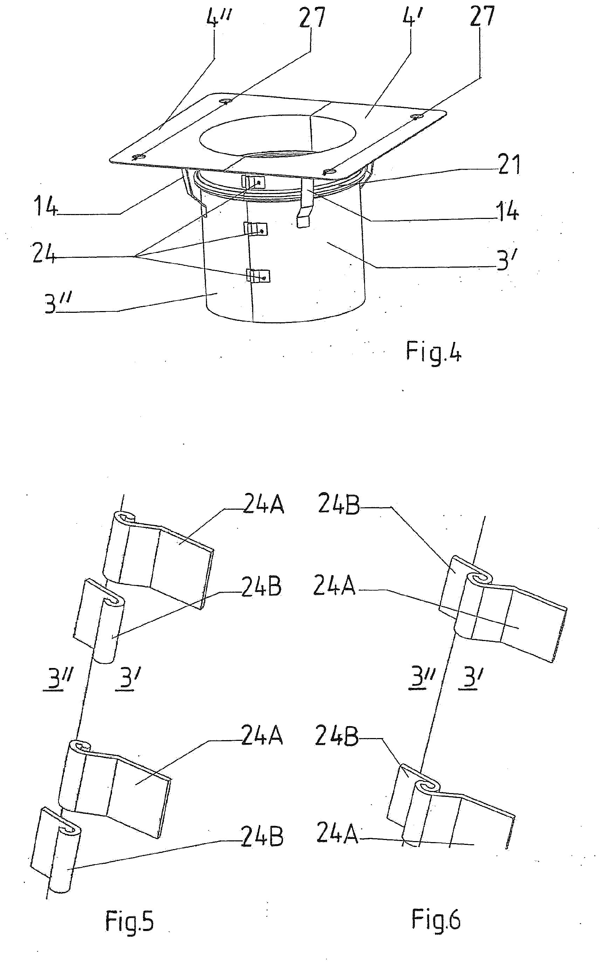

Wie in Figur 5 und 6 gezeigt, können solche Verriegelungskonturen 24 durch hakenartige Elemente 24A,24B gebildet sein, die zur Vormontage in Achsrichtung des Rohrstückes Abstand voneinander aufweisen und dann in Achsrichtung ineinander geschoben werden können, sodass die Verriegelungsposition gemäß Figur 6 erreicht wird.

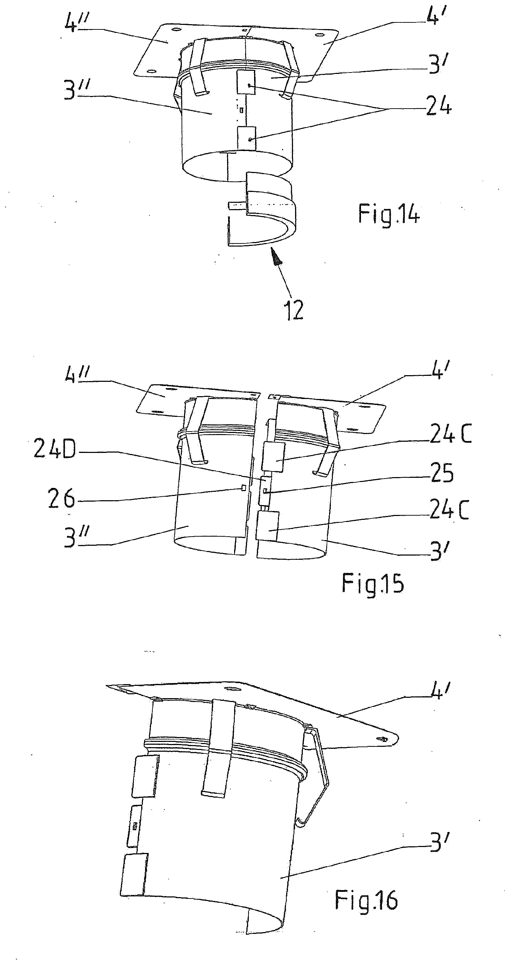

Eine alternative Ausführungsform ist in Figur 14 bis 16 gezeigt. Hierbei ist an der einen Randkante des einen Rohrstückes 3' eine Laschenausbildung vorgesehen. Die Lasche 24C greift in Solllage jeweils außen über den Mantel des Rohrstückes 3", während die Lasche 24D innen hinter den Mantel des Rohrstückes 3" greift und mit einem Rastvorsprung 25 in ein Rastloch 26 eingreift, sodass die Schubverbindungsposition gesichert ist. Die Verbindung der Teile ist auch in anderer Weise möglich, beispielsweise in dem ein an dem einen Teil vorgesehener Biegeabschnitt in eine Lochung des anderen Teils eingreift und umgebogen wird, um die Lage der Teile aneinander zu sichern.

Auch die Hülse 6',6" besteht aus zwei jeweils Halbschalen bildenden Teilstücken, die lösbar miteinander verbunden sind. Auch mit Mittel 7,8,9, mittels der durch die Hülse 6',6" geführte Kabel oder Rohre rauchgasdicht umfasst sind, können aus Halbschalen bildenden Teilstücken bestehen oder an den Teilstücken der Hülse 6',6" angeformt oder angebunden sein.

Im Ausführungsbeispiel weist der Flansch 4',4" Durchgangslochungen 27 auf. Zur Befestigung des Flansches an der entsprechenden Gebäudewand oder Decke können durch diese Durchgangslochungen 27 Befestigungsmittel, beispielsweise Schrauben oder dergleichen eingebracht werden. Auch die Befestigung mittels Metalldübeln kann durch diese Durchgangslochungen 27 erfolgen.

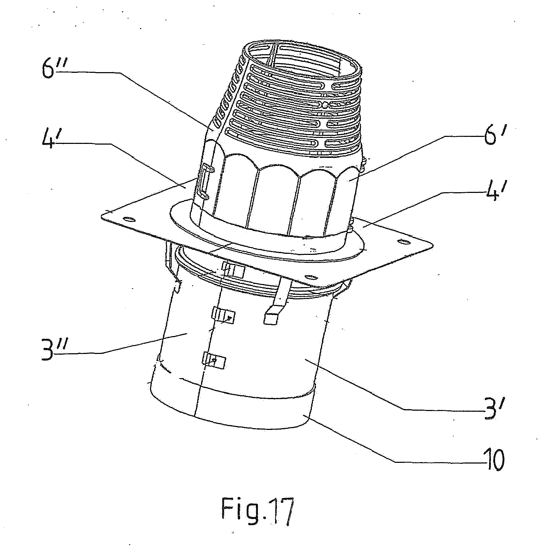

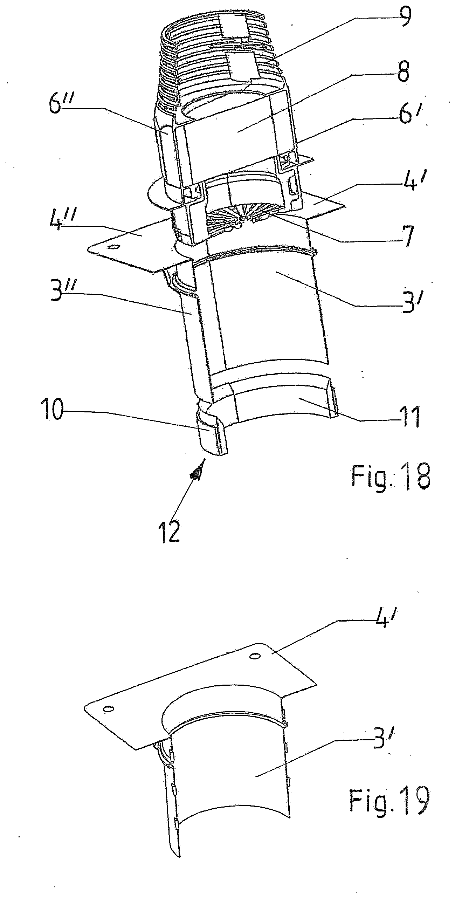

In den Figuren 17 bis 25 ist eine weitere Anordnung in der Form einer branddichten oder rauchgasdichten Durchführung von Rohren und/oder Kabeln durch eine Gebäudewand oder -decke veranschaulicht. In eine Durchgangslochung einer Gebäudewand oder dergleichen, die in der Zeichnung nicht gezeigt ist, ist mit radialem Bewegungsspiel zur Lochlaibung ein Rohrstück 3',3" aus feuerbeständigem Material eingesetzt. Das Rohrstück 3',3" weist an einem ersten Endbereich einen über den Mantel des Rohrstückes 3',3" seitlich vorragenden Flansch 4',4" auf, der in Montagesolllage an der Decken- oder Wandfläche anliegt.

In die flanschseitige Mündung des Rohres 3',3" ist eine Hülse 6',6" eingesetzt, die über die Mündung nach außen vorragt, wie in Figur 17 veranschaulicht ist. Diese Hülse 6',6" besteht vorzugsweise zumindest teilweise aus intumeszierendem Material. Des Weiteren sind im von der Hülse 6',6" umschlossenen Innenraum Mittel 7,8,9 unverlierbar angeordnet, mittels derer durch die Hülse 6',6" geführte Kabel oder Rohre zumindest rauchgasdicht umfasst sind. Das Rohrstück 3',3" weist an seinem zweiten Ende außenliegend und innenliegend Dichtmittel 10,11 aus intumeszierendem Material auf. Vorzugsweise besteht das Rohrstück 3',3" samt Flansch 4',4" aus Metall, insbesondere Stahl. Die Hülse 6',6" besteht vorzugsweise aus Kunststoff, insbesondere aus intumeszierendem Kunststoff. Bei diesen Ausführungsbeispielen weist das Rohrstück 3',3" außenliegend umlaufend als Dichtmittel 10 einen Materialstreifen aus intumeszierendem Material auf und ebenso innenliegend umlaufend als Dichtmittel 11 einen Materialstreifen aus intumeszierendem Material. Bei den dargestellten Ausführungsformen, bei denen das Rohrstück 3',3" nur an einem ersten Ende einen Flansch 4',4" aufweist, ist auf das zweite Ende ein Kantenschutzprofil 12 aufgesteckt, welches die beiden Dichtmittel 10,11 aus intumeszierendem Material als integrale Bestandteile umfasst. Vorzugsweise ist der innenliegende Materialstreifen 11 erheblich dicker und/oder breiter als der außenliegende Materialstreifen 10.

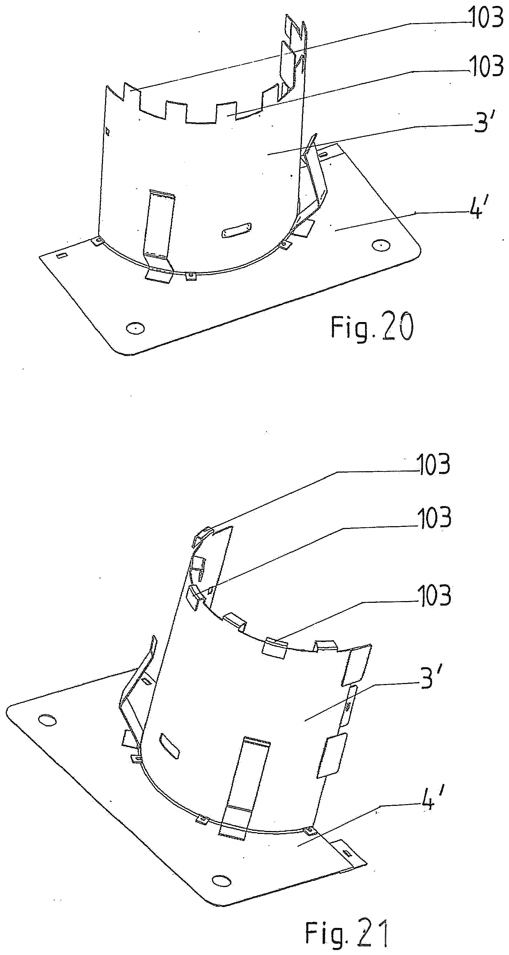

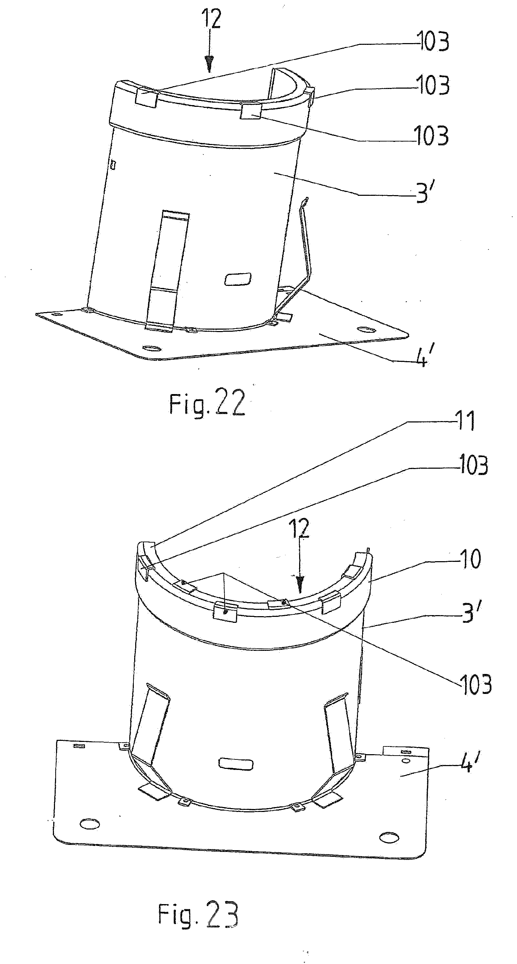

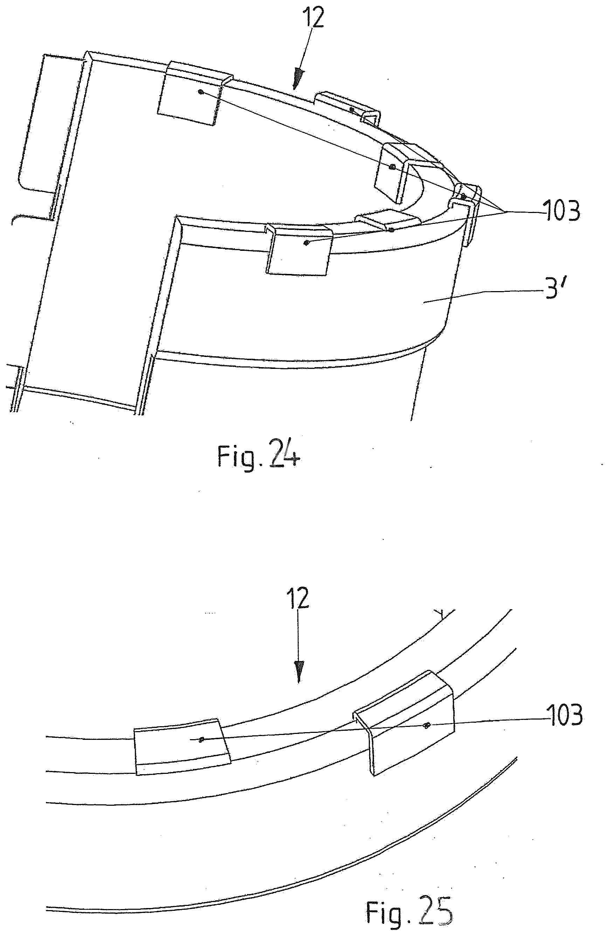

Wie insbesondere in den Figuren 20 bis 25 gezeigt, weist das zweite Ende des Rohrstücks 3',3" erfindungsgemäße Haltemittel 103 auf. Diese Haltemittel 103 dienen dazu, das außenliegende Dichtmittel 10 und das innenliegende Dichtmittel 11 oder sowohl den innenliegenden Bereich des aufgesteckten Kantenschutzprofiles 12 als auch den außenliegenden Bereich dieses Kantenschutzprofils 12 lagesicher am Rohrstück 3',3" zu fixieren. Die Haltemittel 103 sind durch am zweiten Ende des Rohrstückes in dessen Verlängerung abragend ausgebildete Laschen geformt, die in der Ausgangslage, wie sie in Figur 20 gezeigt ist, axial von dem Rohrstück 3',3" abragen und in der Montagesolllage wechselweise um 180° nach außen bzw. nach innen umgebogen sind, wie in Figur 21 gezeigt ist. In dieser Position, die auch der Position 22 bis 25 entspricht, sind durch diese umgebogenen Laschen die Dichtmittel 10,11 bzw. das Kantenschutzprofil 12, welches integral die Dichtmittel 10,11 beinhaltet, fixiert. Insbesondere sind diese Haltemittel 103 in Form der Laschen umlaufend mit Abstand voneinander am Rand des zweiten Endes des Rohrstückes 3',3" angeformt. Sie bestehen vorzugsweise aus plastisch biegbarem Material, sodass sie aus der Position gemäß Figur 20 in die Position gemäß Figur 21 biegbar sind und in dieser Position nach dem Biegevorgang verbleiben. Vorzugsweise greifen die Haltemittel 103 durch Schlitze in einer Stirnkante des Kantenschutzprofiles 12 und sind wechselweise nach innen und außen umgebogen. Dies ist anschaulich in Figur 23, 24 und 25 gezeigt. Wie auch in Figur 24 ersichtlich ist, ist der innenliegende Materialstreifen bzw. der innenliegende Schenkel des im Querschnitt U-förmigen Kantenschutzes 12 erheblich länger ausgebildet als der außenliegende Schenkel, vorzugsweise doppelt bis viermal so lang.

Die erfindungsgemäße Ausgestaltung ermöglicht es in einfacher Weise, das Kantenschutzprofil 12 bzw. die Materialstreifen (10,11) richtig zu positionieren und dauerhaft am Rohrstück 3',3" zu fixieren.

Die Erfindung ist nicht auf die Ausführungsbeispiele beschränkt, sondern im Rahmen der Offenbarung vielfach variabel.

### Bezugszeichenliste

- 1: Gebäudewand oder -decke
- 2: Durchgangslochung
- 3', 3": Rohrstück
- 4', 4": Flansch
- 5: Wandfläche
- 6', 6": Hülse
- 7: Mittel
- 8: Mittel
- 9: Mittel
- 10: Dichtmittel
- 11: Dichtmittel
- 12: Kantenschutzprofil
- 13: Rippe
- 14: Haltefinger
- 15: Verriegelungskonturen
- 16: Verschlussschieber
- 17: Riegelkanten
- 18: zweites Rohrstück
- 19: Laschen
- 20: Haltekonturen v. 3', 3"
- 21: Sicke
- 22: Stellschrauben
- 23: Flanschrand
- 24: Verriegelungskonturen
- 24A, 24B: hakenartige Elemente
- 24C: Lasche
- 24D: Lasche
- 25: Rastvorsprung
- 26: Rastloch
- 27: Durchgangslochung
- 103: Haltemittel

## Patentansprüche

1. Anordnung in Form einer branddichten und/oder rauchgasdichten Durchführung von Rohren und/oder Kabeln durch eine Gebäudewand oder -decke, wobei die Gebäudewand oder -decke eine Durchgangslochung aufweist, wobei in die Durchgangslochung mit Bewegungsspiel zur Lochlaibung ein Rohrstück(3',3") aus feuerbeständigem Material eingesetzt ist, das an einem ersten Endbereich einen über das Rohrstück seitlich vorrangenden Flansch (4',4") aufweist, der in Montagesolllage an der Wand- oder Deckenfläche anliegt, in die flanschseitige Mündung des Rohrstücks (3',3") eine Hülse (6',6") eingesetzt ist, die über die Mündung vorragt, die aus intumeszierendem Material besteht oder innenseitig und/oder außenseitig von solchem Material überdeckt ist und die Mittel (7,8,9) aufweist, mittels derer durch die Hülse (6',6") geführte Kabel oder Rohre rauchdicht umfasst sind, das Rohrstück (3',3") an einem zweiten Endbereich außenliegend umlaufend als Dichtmittel (10) einen Materialstreifen aus intumeszierendem Material aufweist, innenliegend umlaufend als Dichtmittel (11) einen Materialstreifen aus intumeszierendem Material aufweist, und/oder das Rohrstück (3',3") an seinem zweiten Ende ein Kantenschutzprofil (12) aus intumeszierendem Material aufweist, und das zweite Ende des Rohrstücks (3',3") Haltemittel (103) aufweist, die das außenliegende Dichtmittel (10), das innenliegende Dichtmittel (11) oder den innenliegenden Bereich des aufgesteckten Kantenschutzprofils (12) und den außenliegenden Bereich des Kantenschutzprofils (12) lagesicher am Rohrstück (3',3") fixieren.

2. Anordnung nach Anspruch 1, **dadurch gekennzeichnet, dass** die Haltemittel (103) durch am zweiten Ende des Rohrstücks (3',3") ausgebildete Laschen gebildet sind, die nach innen und/oder außen umgebogen sind und die Dichtmittel (10, 11) oder die innenliegenden und außenliegenden Bereiche des Kantenschutzprofils (12) zwischen sich und dem Mantel des Rohstücks (3',3") halten.

3. Anordnung nach Anspruch 2, **dadurch gekennzeichnet, dass** die Laschen umlaufend mit Abstand voneinander am Rand des zweiten Endes des Rohrstücks (3',3") angeformt sind.

4. Anordnung nach Anspruch 2 oder 3, **dadurch gekennzeichnet, dass** die Laschen aus biegbarem Material bestehen.

5. Anordnung nach einem der Ansprüche 1 bis 4, **dadurch gekennzeichnet, dass** die Haltemittel (103) durch Schlitze in einer Stirnkante des Kantenschutzprofils (12) gesteckt und wechselweise nach innen und/oder außen umgebogen sind.

6. Anordnung nach einem der Ansprüche 1 bis 5, **dadurch gekennzeichnet, dass** der innenliegende Materialstreifen aus intumeszierendem Material oder der entsprechende innenliegende Bereich des Kantenschutzprofils (12) dicker und/oder länger ist als der außenliegende Bereich des Kantenschutzprofils (12), vorzugsweise mindestens doppelt so dick und/oder doppelt bis vierfach so lang ist.

7. Anordnung nach einem der Ansprüche 1 bis 6, **dadurch gekennzeichnet, dass** die Haltemittel (103) in entsprechende Aussparungen bzw. Rücksprünge der innenliegenden Bereiche des Kantenschutzprofils (12) eingreifen.

## Claims

1. An assembly in the form of a fire-proof and/or gas-proof lead-through of conduits and/or cables through a building wall or ceiling, wherein the building wall or ceiling includes a through-hole, wherein in the through-hole with movement play with respect to the hole jamb a conduit piece (3', 3") of a fire-resistant material is fitted including a flange (4', 4") laterally projecting, at a first end section, beyond the conduit piece, said flange abutting, in the desired mounting position, the wall or ceiling surface, in the flange-side orifice of the conduit piece (3', 3") a sleeve (6', 6") being fitted that projects beyond the orifice, and that is made of an intumescent material or is covered on the inside and/or on the outside by such a material and comprises the means (7, 8, 9), by means of which cables or conduits fed through the sleeve (6', 6") are enclosed in a smoke-tight manner, the conduit piece (3', 3") including at a second end section circumferentially on the outside as a sealing means (10) a material strip made of intumescent material, circumferentially on the inside as a sealing means (11) a material strip made of intumescent material, and/or the conduit piece (3', 3") comprises at its second end an edge protection profile (12) made of intumescent material, and the second end of the conduit piece (3', 3") comprises holding means (103) that secure the outside sealing means (10), the inside sealing means (11) or the inside section of the fitted edge protection profile (12) and the outside section of the edge protection profile (12) in place at the conduit piece (3', 3").

2. The assembly according to claim 1, **characterized by that** the holding means (103) are formed by flaps provided at the second end of the conduit piece (3', 3"), which are inwardly and/or outwardly bent and hold the sealing means (10, 11) or the inside and outside sections of the edge protection profile (12) between themselves and the envelope of the conduit piece (3', 3").

3. The assembly according to claim 2, **characterized by that** the flaps are circumferentially formed at a distance from each other at the rim of the second end of the conduit piece (3', 3").

4. The assembly according to claim 2 or 3, **characterized by that** the flaps are made of a bendable material.

5. The assembly according to one of claims 1 to 4, **characterized by that** the holding means (103) are fitted through slots in a front edge of the edge protection profile (12) and are alternatingly inwardly and/or outwardly bent.

6. The assembly according to one of claims 1 to 5, **characterized by that** the inside material strip made of intumescent material or the corresponding inside section of the edge protection profile (12) is thicker and/or longer than the outside section of the edge protection profile (12), preferably at least two times in thickness and/or two to four times in length.

7. The assembly according to one of claims 1 to 6, **characterized by that** the holding means (103) engage in corresponding recesses or hollows of the inside sections of the edge protection profile (12).

## Revendications

1. Système sous la forme d'une traversée de tubes ou câbles étanche aux gaz et/ou ignifuge à travers une paroi ou un plafond d'un bâtiment, dans lequel la paroi ou le plafond du bâtiment comporte un trou traversant, dans lequel dans le trou traversant une portion de tube (3', 3") en un matériau résistant au feu est prévue avec jeu de déplacement par rapport à l'embrasure du trou, cette portion de tube (3', 3") comportant une bride (4', 4") faisant saillie latéralement à une première section d'extrémité au-delà de la portion de tube, cette bride étant en appui, dans la position de montage de consigne, sur la surface de la paroi ou du plafond, dans l'orifice au côté de la bride de la portion de tube (3', 3") une douille (6', 6") étant prévue qui fait saillie au-delà de l'orifice, et qui est en un matériau intumescent ou est recouverte intérieurement et/ou extérieurement d'un tel matériau et comprend les moyens (7, 8, 9), au moyen desquels des câbles ou tubes traversant la douille (6', 6") sont compris de façon étanche aux fumées, la portion de tube (3', 3") comportant à une deuxième section d'extrémité circonférentiellement à l'extérieur comme moyen d'étanchéité (10) une bande de matériau en un matériau intumescent, circonférentiellement à l'intérieur comme moyen d'étanchéité (11) une bande de matériau en un matériau intumescent, et/ou la portion de tube (3', 3") comprend à sa deuxième extrémité un profilé de protection des bords (12) en un matériau intumescent, et la deuxième extrémité de la portion de tube (3', 3") comprend des moyens de maintien (103) qui fixent le moyen d'étanchéité extérieur (10), le moyen d'étanchéité intérieur (11) ou la section intérieure du profilé de protection des bords (12) emmanché et la section extérieur du profilé de protection des bords (12) en place à la portion de tube (3', 3").

2. Système selon la revendication 1, **caractérisé en ce que** les moyens de maintien (103) sont réalisés par des languettes prévues à la deuxième extrémité de la portion de tube (3', 3"), qui sont pliées vers l'intérieur et/ou vers l'extérieur et maintiennent les moyens d'étanchéité (10, 11) ou les sections intérieures ou extérieures du profilé de protection des bords (12) entre eux et l'enveloppe de la portion de tube (3', 3") .

3. Système selon la revendication 2, **caractérisé en ce que** les languettes sont réalisées circonférentiellement à une distance les unes des autres au bord de la deuxième extrémité de la portion de tube (3', 3").

4. Système selon la revendication 2 ou 3, **caractérisé en ce que** les languettes sont en un matériau pliable.

5. Système selon une des revendications 1 à 4, **caractérisé en ce que** les moyens de maintien (103) insérés à travers des fentes à un bord avant du profilé de protection des bords (12) et sont pliés de façon alternée vers l'intérieur et/ou vers l'extérieur.

6. Système selon une des revendications 1 à 5, **caractérisé en ce que** la bande de matériau intérieure en un matériau intumescent ou la section intérieure correspondante du profilé de protection des bords (12) est plus épaisse et/ou plus longue que la section extérieure du profilé de protection des bords (12), de préférence au moins deux fois en épaisseur et/ou deux à quatre fois en longueur.

7. Système selon une des revendications 1 à 6, **caractérisé en ce que** les moyens de maintien (103) s'engagent dans des évidements ou encoches des sections intérieures du profilé de protection des bords (12).
